# EUROPÄISCHE PATENTSCHRIFT

(11) **EP 2 545 337 B1**
(45) Veröffentlichungstag und Bekanntmachung des Hinweises auf die Patenterteilung: **31.07.2013**
(21) Anmeldenummer: 12720882.5
(22) Anmeldetag: 14.05.2012
(51) Int. Cl.: F27B 7/20, F27D 17/00, B01D 53/34, B01D 53/86

(54) **VERFAHREN UND VORRICHTUNG ZUR HERSTELLUNG VON ZEMENTKLINKER**
METHOD AND DEVICE FOR PRODUCING CEMENT CLINKER
PROCÉDÉ ET DISPOSITIF POUR PRODUIRE UN CIMENT CLINKER

(30) Priorität: 27.05.2011 DE 102011050677
(43) Veröffentlichungstag der Anmeldung: 16.01.2013
(73) Patentinhaber: Südbayerisches Portlandzementwerk Gebr. Wiesbock & Co. GmbH, 83101 Rohrdorf (DE)
(72) Erfinder: LEIBINGER, Helmut, 4910 Ried im Innkreis (AT)
(74) Vertreter: Lohr, Georg
(86) Internationale Anmeldenummer: PCT/EP2012/058939
(87) Internationale Veröffentlichungsnummer: WO 2012/163663

(56) Entgegenhaltungen:
- EP-B1- 0 461 305

## Beschreibung

### Technisches Gebiet

Die Erfindung betrifft eine Vorrichtung bzw. ein Verfahren nach den Oberbegriffen der unabhängigen Ansprüche, insbesondere eine Vorrichtung zum Herstellen von Zementklinker, der auch als Klinker bezeichnet wird. Die Vorrichtung hat einen Ofen zum Brennen von Rohmehl zu Klinker. Aus einem Auslass des Ofens treten Rauchgase aus.

### Stand der Technik

Klinker wird durch Brennen von Rohmehl in einem Ofen erzeugt. Dabei benötigt man eine Temperatur von etwa 1450°C. Zur Erzeugung dieser Temperatur werden Energieträger wie Kohle, Erdgas, Erdöl, Erdölprodukte (u.a. Kunststoffreste), Papier, Holz oder sonstige Ersatzbrennstoffe in dem Ofen verbrannt. Bei dieser Verbrennung entstehen Rauchgase, die Stickoxyde (NOₓ) enthalten, und deshalb "entstickt" werden müssen. Darunter versteht man die Umsetzung von Stickoxyden mit einem Reduktionsmittel, wie z.B. Amoniak (NH₃), in Gegenwart von Sauerstoff zu Wasser(H₂O) und Stickstoff (N₂). Die zur Umsetzung der Stickoxyde notwendige Reaktionstemperatur kann durch Katalysatoren aus beispielsweise Titandioxid (TiO₂), Wolframtrioxid (WO₃) oder Vanadiumpentoxid (V₂O₅) reduziert werden. Eine solche katalytische Entstickung bezeichnet man auch als SCR, was für "**S**elective **C**atalytic **R**eduktion" - auf deutsch selektive katalytische Reduktion -steht. Entsprechend verwendet man die Abkürzung SNCR ("**S**elective **N**on Catalytic **R**eduction") für die nichtkatalytische Enstickung. Eine SCR zur Entstickung von Rauchgasen von Drehrohröfen für die Klinkerherstellung ist beispielsweise in der Offenlegungsschrift DE 197 56 392 A beschrieben.

Die Rauchgase des Ofens sind staubbeladen und treten mit größenordnungsmäßig 900 -1100°C aus dem Ofen aus. Diese Rauchgase werden dann genutzt, um das Rohmehl in sogenannten Rohmehlvorwärmern vorzuwärmen und zu entsäuern. Dazu verwendet man meist kaskadiert angeordnete Zyklonabscheider, die meist in Wärmetauschertürmen angeordnet sind. Die aus dem Rohmehlvorwärmer austretenden Rauchgase hätten eine für die SCR-Entstickung ausreichende Temperatur, sind aber noch mit Feinstaub beladen, der abrasiv auf den Katalysator wirkt und zu Verstopfungen des Katalysators führen kann. Deshalb ist es zweckmäßig die Rauchgase vor der SCR-Entstickung zu entstauben. Zwar gibt es Filter mit denen man etwa 450°C heiße Gase entstauben könnte, sogenannte Heißgasfilter, jedoch sind diese teuer und großvolumig. Einfacher ist die Verwendung von sogenannten Schlauchfiltern, jedoch benötigen diese deutlich geringere Rauchgastemperaturen, so dass bei deren Verwendung die Rauchgase erst gekühlt, dann gefiltert und anschließend wieder auf die für die katalytische Reduktion notwendige Temperatur erwärmt werden müssen. Diese Anordnung wird auch als "Low Dust" oder "Tail End" Konfiguration bezeichnet.

Die DE 10 2010 004 011 B3 offenbart ein Verfahren und eine Anlage zur Herstellung von Zementklinker. Diese hat wie üblich einen Drehrohrofen aus dem Abgase austreten. Die Abgase werden einem Rohmehlvorwärmer zugeführt, treten aus diesem aus und werden in einem nachgeschalteten SCR-Katalysator entstickt. Das Abgas wird zunächst in einem Kühlturm abgekühlt, dann in einem Filter entstaubt und anschließend in einem Wärmetauscher auf die für den SCR-Katalysator optimale Temperatur aufgeheizt. Als Wärmequelle wird dem Wärmetauscher auf der heißen Seite das durch die SCR-Entstickung aufgeheizte Rauchgas zugeführt. Der Wärmetauscher ist somit ein Rekuperator.

Die EP 0 461 305 B1 offenbart ein Verfahren zur Reinigung der Abgase von Anlagen zur Herstellung von Zementklinker sowie eine entsprechende Anlage. Die Anlage hat einen Drehrohrofen, dessen Abgase einem Wärmetauscherturm zur Rohmehlvorwärmung zugeführt werden. Anschließend speisen die Abgase entweder eine Rohmaterialmühle oder einen Kühlturm und werden anschließend wieder zusammengeführt und einer mehrstufige Filteranlage zugeführt. Der erste Filter ist ein als elektrostatisches Filter ausgeführter Staubfilter. Daran schließt sich eine zweite Filterstufe mit drei als Schüttschichtreaktoren ausgebildeten Filterkammern an. Vor beiden Filterstufen wird dem Rauchgasstrom Frischluft beigemengt, wodurch die Rauchgase abkühlen.

### Darstellung der Erfindung

Der Erfindung liegt die Aufgabe zugrunde die Verluste an Energie bei der Herstellung von Klinker zu reduzieren.

Diese Aufgabe wird durch eine Vorrichtung bzw. durch ein Verfahren nach den unabhängigen Ansprüchen gelöst. Vorteilhafte Ausgestaltungen der Erfindung sind in den Unteransprüchen angegeben.

Bei der Vorrichtung zum Brennen von Klinker in einem Ofen kann die in dem Ofen erzeugte Wärme besonders effizient und vielseitig verwendet werden, weil in dem Ofen erzeugte Wärme über einen ersten Wärmetauscher an ein Wärmeträgerfluid übertragen wird, das Wärmeträgerfluid mit der Wärme durch mindestens eine Leitung zu mindestens einem zweiten Wärmetauscher transportiert wird,um sie dann an eine Wärmesenke abzugegeben, z.B. um einem Rauchgasstrom auf eine für dessen Entstickung notwendige Temperatur zu erwärmen.

Die Kombination aus dem ersten und dem zweiten Wärmetauscher mit dem zwischen diesen bevorzugt im Kreislauf zirkulierenden Wärmeträgerfluid bildet somit ein Wärmeverschubsystem. Dieses Wärmeverschubsystem ermöglicht die räumliche Entkopplung von Wärmequelle und Wärmesenke und erhöht daher den Freiheitsgrad bei der Realisierung der Vorrichtung. Zudem kann über die Auslegung der Wärmetauscher und die Strömungsgeschwindigkeit das Temperaturniveau insbesondere ausgangsseitig des zweiten Wärmetauschers über einen weiten Bereich variiert werden. Auch dies erhöht die Flexibilität, diesmal des Verfahrens. Diese erhöhte Flexibiliät ermöglicht es Klinker deutlich effizienter herzustellen als nach dem Stand der Technik

Mit dem Wärmeverschubsystem kann z.B. Wärme, die zunächst im Ofen erzeugt wurde, dann aber z.B. mit dem Klinker aus diesem ausgetragen wird genutzt werden, um Rauchgase nach einer Entstaubung auf eine für eine SCR notwenige Temperatur zu erwärmen. Dazu kann man beispielsweise der Abluft eines Klinkerkühlers mittels des ersten Wärmetauschers Wärme entziehen und dabei das Wärmeträgerfluid erwärmen. Dieses Wärmeträgerfluid wird dann zu einer Wärmesenke gefördert und gibt dann über den zweiten Wärmetauscher zumindest einen Teil der Wärme an die zweite Wärmesenke ab. Die zweite Wärmesenke kann beispielsweise ein entstaubter Rauchgasstrom sein, der anschließend einer SCR-Anlage zur Entstickung zugeführt wird.

Die Vorrichtung zur Herstellung von Klinker hat mindestens einen Ofen zum Brennen von Rohmehl zu Klinker mit mindestens einem Auslass für Rauchgase, z.B. einen Drehrohrofen und Mittel zum Entsticken von aus dem Ofen austretenden Rauchgasen, z.B. eine SCR-Anlage. Ein erster Wärmetauscher dient dazu beim Verbrennungsprozess im Ofen entstehende Wärme mindestens einem Wärmeträgerfluid zuzuführen. Das Wärmeträgerfluid wird über mindestens eine Leitung für das Wärmeträgerfluid zu mindestens einem zweiten Wärmetauscher transportiert, um die Rauchgase in dem zweiten Wärmetauscher mit zuvor dem Wärmeträgerfluid zugeführter Wärme zu erhitzen, um sie anschließend zu entsticken. Entsprechend hat die Vorrichtung Mittel, um die erhitzten Rauchgase den Mitteln zum Entsticken zuzuführen.

Durch das in der Leitung transportierte Wärmeträgerfluid können die Wärmequelle mit der die Rauchgase auf eine für die Entstickung notwendige Temperatur erwärmt werden und der Ort der Rauchgaserwärmung räumlich voneinander getrennt werden, ohne große Wärmeverluste in Kauf nehmen zu müssen. Man gewinnt deshalb einen zusätzlichen Freiheitsgrad bei der bedarfsgerechten Verteilung der im Ofen entstehenden Wärme. Dies ermöglicht eine bessere Nutzung der in dem Ofen erzeugten Wärme als Prozesswärme, insbesondere für Nebenprozesse bei der Klinkererzeugung. Mit dem Begriff Wärme wird die thermische Energie Q = c(T, p, V) *m* T, die bei einer gegebenen Temperatur in einer Menge eines Stoffes gespeichert ist bezeichnet, wobei c(T,p,V) die spezifische Wärmekapazität, m die Masse und T die Temperatur beschreibt. V und p stehe wie üblich für Volumen bzw. Druck. Wärme kann z. B. in einem Wärmetauscher zum Teil an einen anderen Stoff mit kleinerer Temperatur übertragen werden. Wärme kann von einem Stoff auf einen anderen Stoff übertragen werden und durch den Transport von Stoffen, z.B. durch einen Strom eines Fluids mit dem Strom transportiert werden. Bei solchen Prozessen bezeichnet der Begriff Wärme die in einem Zeitintervall übertragene bzw. transportierte thermische Energie.

Die Erfindung beruht auf der Beobachtung, dass die in dem Ofen erzeugte Wärme durch zwei Prozesse aus dem Ofen sprichwörtlich abtransportiert wird: Zum einen durch den heißen Klinker und zum anderen durch die heißen Rauchgase. Durch die beiden über die Leitung mit dem Wärmeträgerfluid verbundenen Wärmetauscher kann man nun zur Erwärmung der Rauchgase in dem zweiten Wärmetauscher Wärme nutzen, die man zuvor z.B. dem Klinker entzogen hat. Deshalb hat die Vorrichtung bevorzugt mindestens einen Klinkerkühler, auf den der heiße Klinker abgelegt wird. Der Klinkerkühler weist mindesten einen Kühlmittelabgriff auf, um durch den heißen Klinker erwärmtes Kühlmittel abzuziehen und es dem ersten Wärmetauscher zuzuführen, wodurch in dem Kühlmittel gespeicherte Wärme dem Wärmeträgerfluid zugeführt wird. Etwas unpräzise, aber verkürzt, kann man sagen, dass das Kühlmittel durch den Klinker erwärmt wird und anschließend das Wärmeträgerfluid erwärmt. Das Wärmeträgerfluid wird also mittellbar durch in dem Ofen erzeugte Wärme erwärmt. Zumindest ein Teil dieser Wärme kann dann mittels des Wärmeträgerfluids über die Leitung dem zweiten Wärmetauscher zugeführt und dort an das Rauchgas abgegeben werden. Dadurch muss man zur Rauchgaserwärmung keine neue Prozesswärme teuer erzeugen, sondern kann bei der Verbrennung im Ofen entstehende und mit dem Klinker aus diesem transportierte Wärme nutzen.

Besonders ökonomisch ist das Verfahren, wenn das Wärmeträgerfluid in einem Kreislauf zirkuliert. Als Wärmeträgefluid verwendet man bevorzugt ein sogenanntes Thermoöl. Das ist eine hochsiedende temperaturbeständige Flüssigkeit.

Bevorzugt ist im Rauchgasstrom vor dem ersten Wärmetauscher mindestens ein Filter, beispielsweise ein Schlauchfilter. Dadurch wird die Standzeit des Katalysators für die SCR-Entstickung erhöht.

Vor dem Filter ist in dem Rauchgasstrom bevorzugt ein dritter Wärmetauscher angeordnet, um Rauchgas auf eine für den Filter verträgliche Temperatur zu kühlen und im Gegenzug mindestens ein zweites Wärmeträgerfluid zu erwärmen. Dem zweiten Wärmeträgerfluid kann mehr Wärme zugeführt werden, als für die spätere Erwärmung des Rauchgases für die SCR-Entstickung notwendig ist, denn die Temperatur des Rauchgastromes nach dem Verlassen der üblichen Rohmehlvorwärmung ist um etwa 200°C höher, als die am Einlass des Katalysators für die SCR notwendige Temperatur. Die in dem zweiten Wärmeträgerfluid gespeicherte Wärme wird deshalb bevorzugt als Prozesswärme für andere Prozesse verwendet, z.B. um eine Dampfturbine zu betreiben. Der dritte Wärmetauscher kann also insbesondere mindestens einen Dampfkessel aufweisen.

Bevorzugt hat die Vorrichtung einen weiteren Wärmtauscher, der mit den Mitteln zum Entsticken und dem zweiten Wärmetauscher derart verbunden ist, dass Wärme der aus den Mitteln zum Entsticken austretenden Rauchgase in den zweiten Wärmetauscher eintretende Rauchgase erwärmt. Dieser Wärmetauscher wird lediglich aus Gründen einer eindeutigen Bezugnahme nachfolgend auch als Rekuperator bezeichnet. Durch den Rekuperator können Wärmeverluste beim Transport des Wärmeträgerfluids reduziert werden, weil insgesamt weniger Wärme mittels des Wärmeträgerfluids über die Leitung transportiert werden muss, um die für die Entstickung notwendige Rauchgastemperatur einzustellen. Durch den Rekuperator wird zudem auch die bei der Entstickung freiwerdende Wärme zumindest zum Teil genutzt.

Bevorzugt hat die Vorrichtung Mittel zum Leiten entstickter Rauchgase zu einem weiteren Wärmetauscher, um mit Wärme des Rauchgases ein weiteres Wärmeträgerfluid zu erwärmen, beispielsweise als Speisewasservorwärmung für einen Dampfkessel. Dieser weitere Wärmetauscher ist bevorzugt nachrangig zu dem vorbeschriebenen Rekuperator im entstickten Rauchgasstrom angeordnet. Die Auslasstemperatur des Rauchgases am Auslass des weiteren Wärmetauschers ist bevorzugt größer gleich etwa 100°C, bevorzugt etwa 110°C, weil unterhalb dieser Temperatur in dem Rauchgas enthaltenes Wasser kondensiert in dem sich Gase wie HCl, H₂SO₄ und andere lösen, was zur Bildung von Säure in der Vorrichtung führt, welche Leitungen, z.B. als Bestandteil eines Kamins angreift.

Bevorzugt hat der erste Wärmetauscher mindestens eine Leitung für das Wärmeträgerfluid und nachrangig zu dieser Leitung mindestens eine weitere Leitung zum Erwärmen eines weiteren Wärmeträgerfluids, z.B. eines Speisefluids für einen Dampfkessel. Besonders bevorzugt dient die weitere Leitung des ersten Wärmetauschers der Vorwärmung des zweiten Wärmeträgerfluids, welches nach der Vorwärmung durch eine Leitung dem dritten Wärmerauscher, beispielsweise dem genannten Dampfkessel zugeführt wird, um es dort weiter zu erwärmen. Diese Verbesserung nutzt die Beobachtung, dass die Mindesttemperatur für die gängigen SCR-Verfahren zwar von der Rauchgaszusammensetzung abhängt, aber typischerweise größenordnungsmäßig 230-270°C beträgt. Diese Temperatur ist die Mindesttemperatur für das dem ersten Wärmetauscher zulaufende Wärmeträgerfluid. Folglich kann die Temperatur des Wärmeträgers, der das Wärmeträgerfluid im ersten Wärmetauscher erwärmt nach der Erwärmung des Wärmeträgerfluids nicht kälter als diese Mindesttemperatur für die SCR sein. Durch die nachrangige Leitung zum Erwärmen eines Speisefluids, im einfachsten Fall z.B. Wasser, kann dem Wärmeträger weitere nutzbare Wärme entzogen werden. Dadurch wird die in dem Ofen entstehende Wärme besser genutzt, d.h. es steht bei gleicher Ofenleistung mehr Prozesswärme für andere Prozesse zur Verfügung. Der Wärmeträger kann z.B. ein zuvor durch Klinker erwärmtes Kühlmittel sein.

Durch die Leitung mit dem Wärmeträgerfluid werden der erste und der zweite Wärmeträger thermisch gekoppelt, können aber räumlich weit von einander entfernt sein. Deshalb kommen grundsätzlich alle Stellen, an denen im Ofen produzierte Prozesswärme erzeugt und sinnvoll abgegriffen werden kann, für die Anordnung des ersten Wärmetauschers in Frage. Beispielsweise kann der Ofen einen Abzweig für Rauchgase haben, um im Rohmehl vorhandene Verunreinigungen, wie z.B. Chloride, Schwefel, Alkalimetalle aus den Kreisläufen zwischen Ofen und Rohmehlvorwärmer zu entfernen. Man spricht dann auch von einem Bypass. Dann kann der erste Wärmetauscher derart mit dem Abzweig verbunden sein, dass zumindest ein Teil des abgezweigten Rauchgasstromes dem ersten Wärmetauscher zugeführt wird, um in dem Rauchgasstrom gespeicherte Wärme dem Wärmeträgerfluid zuzuführen. Dabei wird der Rauchgasstrom abgekühlt. Der abgekühlte Rauchgasstrom kann dann z.B. als Kühlluft für einen Klinkerkühler verwendet werden und so wieder in den Ofen rückgeführt werden. Alternativ kann der abgekühlte Rauchgasteilstrom auch stromabwärts des Rohmehlvorwärmers den übrigen Rauchgasen zugegeben werden.

Üblicherweise ist der Ofen abluftseitig mit mindestens einem Rohmehlvorwärmer verbunden, um mit in den Rauchgasen gespeicherter Wärme das Rohmehl vorzuwärmenund zumindest teilweise zu entsäuern. In diesem Fall kann der erste Wärmetauscher derart mit einem Rauchgasauslass des Rohmehlvorwärmers verbunden sein, dass aus dem Rohmehlvorwärmer austretendes Rauchgas das Wärmeträgerfluid erwärmt.

### Beschreibung der Zeichnungen

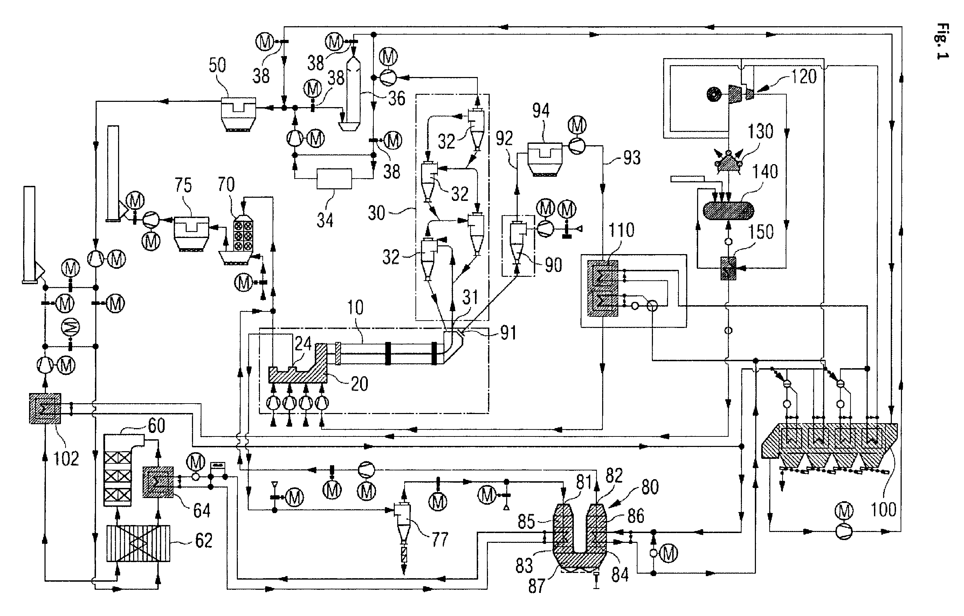

Die einzige Zeichnung zeigt ein Beispiel für ein Fließschema einer Vorrichtung zum Brennen von Klinker aus Rohmehl. Kern der Vorrichtung ist ein Drehrohrofen 10 zwischen einem Klinkerkühler 20 und einem Wärmetauscherturm 30. Der Drehrohrofen 10 hat einen von der Seite des Klinkerkühlers aus in den Drehrohrofen 10 hineinragenden Brenner (nicht dargestellt), um die zur Erzeugung von Klinker benötigte Wärme durch Verbrennung in dem Drehrohrofen 10 zu erzeugen. Das bei der Verbrennung entstehende Rauchgas tritt wärmetauscherturmseitig aus dem Drehrohrofen 10 aus. Von dieser Seite wird im Gegenzug Rohmehl in den Drehrohrofen 10 eingebracht. Der Wärmetauscherturm 30 hat hier beispielhaft 4 kaskadiert miteinander verbundene, also in Reihe geschaltete Zyklone 32, zur Vorwärmung und teilweisen Entsäuerung von Rohmehl durch Wärme des Rauchgases und zur Grobentstaubung des Rauchgases. Das aus dem Wärmetauscherturm 30 austretende Rauchgas hat eine typische Temperatur von 300-500°C. Bevor das Rauchgas einem Rauchgasfilter 50 zur weiteren Entstaubung zugeführt wird, wird es auf eine Temperatur kleiner größenordnungsmäßig 150°C gekühlt. Dadurch kondensieren in dem Rauchgas enthaltene Schwermetalle, wie z.B: Quecksilber und Thallium, an dem im Rauch enthaltenen Staub. Dieser Staub wird im Rauchgasfilter 50 abgeschieden, er wirkt somit als Kältefalle für Schwermetalle. Zudem wird zum einen das zu entstaubende Volumen (pro Zeiteinheit) drastisch reduziert und es kann kostenkünstige Gewebefiltertechnik verwendet werden. Zur Kühlung der Rauchgase sind drei Möglichkeiten vorgesehen:
(i) Leitung der Rauchgase zu einem Dampfkessel 100, um Dampf zu erzeugen, der in einer Turbinenanordnung 120 entspannt wird, um z.B. einen Generator anzutreiben,
(ii) Leitung der Rauchgase zu einer Rohmühle 34, um das der Rohmühle zugeführte Rohmaterial zu trocknen und das Rohmehl vorzuwärmen und
(iii) Leitung der Rauchgase zu einem Verdampfungskühler 36.

In den entsprechenden Leitungen sind Klappen 38 vorgesehen, um den Rauchgasstrom auf die drei Möglichkeiten zur Kühlung aufzuteilen. Im normalen Betrieb sollte möglichst wenig, also kein oder fast kein Rauchgas mittels des Verdampfungskühlers 36 gekühlt werden, denn die dem Rauchgas im Verdampfungskühler 36 entzogene Wärme steht nicht mehr als Prozesswärme zur Verfügung. Der Verdampfungskühler hat somit bevorzugt nur die Funktion eines Notkühlers, falls der Dampfkessel 100 nicht genutzt werden kann.

Das gekühlte Rauchgas wird dann in einem Rauchgasfilter 50 entstaubt und das entstaubte Rauchgas wird einer SCR-Anlage 60 zur katalytischen Entstickung der Rauchgase zugeführt. Dafür muss es auf mindestens 230°C-270°C erwärmt werden. Deshalb wird es vom Rauchgasfilter 50 kommend zunächst einem Rekuperator 62 zugeführt, dem im Gegenstrom entsticktes aus der SCR-Anlage austretendes Rauchgas zugeführt wird, so dass Wärme von dem entstickten (Reingas)auf das zu entstickende Rauchgas (Rohgas) übertragen wird. Das aus dem Rekuperator austretende, zu entstickende Rauchgas wird einem weiteren Wärmetauscher zugeführt, um es weiter zu erwärmen. Dieser weitere Wärmetauscher 64 wird im Rahmen dieser Patentanmeldung auch als "zweiter Wärmetauscher" bezeichnet. Die zum Erwärmen des Rauchgases notwendige Wärme wird dem zweiten Wärmetauscher 64 über ein sogenanntes Thermoöl als Wärmeträgerfluid zugeführt. Das in dieser Weise in zwei Stufen (erste Stufe Rekuperator 62, zweite Stufe "zweiter Wärmetauscher 64") erwärmte Rauchgas wird der SCR-Anlage 60 zugeführt und dort entstickt.

Das entstickte Rauchgas erwärmt im Rekuperator 62, wie schon beschrieben, die noch zu entstickenden Rauchgase und wird entsprechend abgekühlt. Anschließend wird das Rauchgas in einem weiteren Wärmetauscher 102 auf bevorzugt etwa 110°C abgekühlt und kann wie angedeutet über einen Kamin abgeführt werden. Die dem Rauchgas in dem Wärmetauscher 102 entzogene Wärme dient zur Speisewasservorwärmung für den Dampfkessel 100 und/oder einen Boiler 110. Alternativ könnte sie auch in ein Fernwärmenetz eingespeist werden oder im einem ORC-Verfahren zur Stromerzeugung genutzt werden. "ORC" ist die gebräuchliche Abkürzung für "Organic Rankine Cycle", ein Verfahren bei dem Dampfturbinen mit dem Dampf niedrig siedender organischer Fluiden betrieben werden.

Zudem wird mit der bevorzugt kontinuierlichen Entnahme von Klinker aus dem Drehrohrofen 10 Wärme aus dem Drehrohrofen 10 abgeführt. Dieser zunächst etwa 1450°C heiße Klinker wird in dem Klinkerkühler 20 gekühlt. Als Kühlmittel dient bevorzugt Luft. Der Klinkerkühler 20 ist somit ein Wärmetauscher. Ein Teil der in dem Klinkerkühler 20 erwärmten Luft wird über einen sogenannten Mittenluftabgriff 24 aus dem Klinkerkühler abgeführt. Mit in der abgeführten Luft, nachfolgend kurz Abluft genannt, gespeicherter Wärme wird nach einer Grobentstaubung durch einen Zyklon 77 in einem Wärmetauscher 80 das Thermoöl als Wärmeträgerfluid erwärmt. Die an das Wärmeträgerfluid übertragene Wärme kann auch über weite Strecken mit nur geringen Wärmeverlusten transportiert werden, insbesondere um in dem zweiten Wärmetauscher 64 das zu entstickende Rauchgas auf die für die Entstickung notwendige Temperatur zu erwärmen.

Der Wärmetauscher 80 hat einen Einlass 81 für die Abluft, die in dem Wärmetauscher zunächst über eine erste Leitung 83 geleitet wird, um das Wärmeträgerfluid, welches durch die erste Leitung strömt, zu erwärmen. Nachrangig zu der ersten Leitung 83 ist eine zweite Leitung 84 angeordnet, über die die Abluft geleitet wird. In der zweiten Leitung 84 strömt ein weiteres Wärmeträgerfluid und wird durch die Abluft erwärmt. Im gezeigten Beispiel ist das weitere Wärmeträgerfluid Wasser, das als Speisewasser für den Dampfkessel 100 und/oder einen Boiler 110 vorgewärmt wird. Die Abluft verlässt den Wärmetauscher 80 über einen Auslass 82. Die Abluft wird in dem Wärmetauscher 80 in einem Strömungskanal geführt. Der Strömungskanal ist U-förmig, d.h. er hat zwei freie Schenkel 85, 86, die durch einen untenliegenden Querschenkel 87 miteinander verbunden sind. In jedem der beiden freien Schenkel 85, 86 ist je eine der beiden Leitungen 83, 84. Durch die Umlenkung der Abluft im Bereich des Querschenkels 87 sammelt sich am Boden des Querschenkels von der Abluft mitgetragener Klinkerstaub, der dort abgeschieden werden kann.

Der Auslass 85 ist mit einem Kühler 70 verbunden um die Temperatur für den nachgeschalteten Filter 75 einzustellen. Mit dem Filter 75 wird die Abluft entstaubt und kann z.B. über einen angedeuteten Kamin abgegeben werden.

Die Vorrichtung zum Brennen von Klinker hat neben der oben beschriebenen Rauchgasbehandlung einen sogenannten Chloridbypass. Ein Teil des aus dem Drehrohrofen 10 austretenden Rauchgases wird nicht dem Rohmehlvorwärmer zugeführt, sondern zunächst in einer Mischkammer 90 mit Frischluft vermengt. Dabei wird eine Mischtemperatur von etwa 450°C (400°C-500°C) eingestellt. Diese so erreichte Temperatur ermöglicht eine Heißgasentstaubung in einem Heißgasfilter 94. Dem Heißgasfilter ist ein Boiler 110 nachgeschaltet. In dem Boiler wird Dampf erzeugt, der in der Turbinenanordnung entspannt wird. Das aus dem Boiler austretende Rauchgas wird als Kühlluft für den Klinkerkühler 20 verwendet und über den Klinkerkühler 20 wieder in den Drehrohrofen 10 eingespeist. Weil die aus dem Boiler austretenden Rauchgase noch eine Temperatur haben, die deutlich oberhalb üblicher Umgebungstemperaturen liegt, kann durch die Rückführung der Rauchgase über den Klinkerkühler eine sehr hohe Sekundärlufttemperatur erreicht werden, der Brennstoffeinsatz sinkt im Gegenzug entsprechend.

### Bezugszeichenliste

- 10: Ofen, hier als Drehrohrofen
- 20: Klinkerkühler
- 24: Mittenluftabgriff
- 30: Wärmetauscherturm
- 32: Zyklon
- 34: Rohmühle
- 36: Verdampfungskühler
- 38: Ventil/Klappe
- 50: Rauchgasfilter zur Entstaubung/ Kältefalle für Schwermetalle
- 60: SCR-Anlage
- 62: Rekuperator / Wärmetauscher
- 64: (zweiter) Wärmetauscher
- 70: Kühler, hier beispielsweise Luft/Luft Wärmetauscher
- 75: Rauchgasfilter zur Entstaubung
- 77: Zyklon zur Grobstaubabscheidung
- 80: Wärmetauscher
- 81: Einlass
- 82: Auslass
- 83: erste Leitung für Wärmeträgerfluid
- 84: zweite Leitung für Wärmeträgerfluid
- 85: freier Schenkel
- 86: freier Schenkel
- 87: Querschenkel
- 90: Mischkammer
- 94: Heißgasentstaubung
- 100: Abhitzekessel/Dampfkessel
- 102: Wärmetauscher zur Speiswasservorwärmung
- 110: Boiler zur Dampfgewinnung
- 120: Turbinenanordnung
- 130: Kondensator I
- 140: Kondensator II
- 150: Kondensator III

## Patentansprüche

1. Vorrichtung zur Herstellung von Klinker, zumindest aufweisend:
- einen Ofen (10) zum Brennen von Rohmehl zu Klinker mit einem Auslass für Rauchgase,
- einem Klinkerkühler (20), um aus dem Ofen entnommenen Klinker mit einem Kühlmittel zu kühlen, und
- Mittel zum Entsticken (60) von im Ofen entstehenden Rauchgasen,
**dadurch gekennzeichnet dass**
(i) die Vorrichtung mindestens einen ersten Wärmetauscher (80) hat, um beim Verbrennungsprozess im Ofen entstehende Wärme mindestens einem Wärmeträgerfluid zuzuführen,
(ii) der erste Wärmetauscher (80) über mindestens eine Leitung für das Wärmeträgerfluid mit mindestens einem zweiten Wärmetauscher (64) verbunden ist, um in dem zweiten Wärmetauscher Rauchgase mit zuvor dem Wärmeträgerfluid zugeführter Wärme zu erhitzen, und
(iii) der zweite Wärmetauscher (64) Mittel hat, um die erhitzten Rauchgase den Mitteln zum Entsticken (60) zuzuführen.

2. Vorrichtung nach Anspruch 1
**dadurch gekennzeichnet, dass**
der Klinkerkühler (20) mindesten einen Kühlmittelabgriff hat, um durch den Klinker erwärmtes Kühlmittel abzuziehen und es dem ersten Wärmetauscher (80) zuzuführen, wodurch in dem Kühlmittel gespeicherte Wärme dem Wärmeträgerfluid zugeführt wird.

3. Vorrichtung nach Anspruch 1 oder 2,
**dadurch gekennzeichnet, dass**
die Vorrichtung einen weiteren Wärmtauscher (62) hat, der mit den Mittel zum Entsticken (60) und dem zweiten Wärmetauscher (64) derart verbunden ist, dass Wärme der aus den Mitteln zum Entsticken (60) austretenden Rauchgase in den zweiten Wärmetauscher eintretende Rauchgase erwärmt.

4. Vorrichtung nach einem der vorstehenden Ansprüche
**dadurch gekennzeichnet, dass**
der erste Wärmetauscher (80) mindestens eine Leitung (83) für das Wärmeträgerfluid aufweist und nachrangig zu diese Leitung (83) mindestens eine weitere Leitung (84) zum Erwärmen eines Speisefluids eines Dampfkessels (100, 110).

5. Vorrichtung nach einem der vorstehenden Ansprüche
**dadurch gekennzeichnet, dass** zu
die Vorrichtung einen weiteren Wärmetauscher (62) und Mittel zum Leiten entstickter Rauchgase zu dem weiteren Wärmetauscher (102) aufweist, um mit Wärme des entstickten Rauchgases ein weiteres Wärmeträgerfluid zu erwärmen.

6. Vorrichtung nach einem der vorstehenden Ansprüche
**dadurch gekennzeichnet, dass**
die Vorrichtung eine Rauchgasrückführung hat, um einen Teil der Rauchgase des Ofens (10) diesem zuluftseitig wieder zuzuführen, wobei der erste Wärmetauscher derart in die Rauchgasrückführung eingebunden ist, dass zumindest ein Teil des Rauchgasstromes dem ersten Wärmetauscher zugeführt wird, um in dem Rauchgasstrom gespeicherte Wärme dem Wärmeträgerfluid zuzuführen.

7. Vorrichtung nach einem der vorstehenden Ansprüche,
**dadurch gekennzeichnet, dass**
der Ofen (10) abluftseitig mit mindestens einem Rohmehlvorwärmer (30, 32) verbunden ist, um mit in den Rauchgasen gespeicherter Wärme das Rohmehl vorzuwärmen, wobei der Rohmehlvorwärmer (30, 32) einen Rauchgasauslass hat, der mit dem ersten Wärmetauscher verbunden ist, um im Rauchgas enthaltene Wärme dem Wärmeträgerfluid zuzuführen.

8. Vorrichtung nach einem der vorstehenden Ansprüche,
**gekennzeichnet, durch**
mindestens einen Filter (50) zur Entstaubung von Rauchgasen, mindestens eine Leitung zum Leiten entstaubter Rauchgase von dem Filter (50) zu den Mitteln zum Entsticken (60), um die Rauchgase nach der Entstaubung zu entsticken.

9. Verfahren zum Herstellen von Klinker mit den Schritten:
- Brennen von Rohmehl zu Klinker in einem Ofen (10),
- Entsticken von in dem Ofen (10) entstandenen Rauchgasen,
**gekennzeichnet, durch**
(i) Erwärmen eines Wärmeträgerfluids mit beim Brennen erzeugter Wärme in einem ersten Wärmetauscher (80),
(ii) Leiten des Wärmeträgerfluids zu einem zweiten Wärmetauscher (64),
(iii) Erwärmen von Rauchgasen in dem zweiten Wärmetauscher (64) wobei Wärme dem Wärmeträgerfluid entzogen wird,
(iv) Zuführen der zuvor erwärmten Rauchgase zu Mitteln zum Entsticken (60), um die Rauchgase zu entsticken.

10. Verfahren nach Anspruch 7,
**gekennzeichnet, durch**
Zuführen von dem Ofen (10) entnommenen Klinker zu einem Klinkerkühler (20),
Kühlen des Klinkers in dem Klinkerkühler (20) unter gleichzeitiger Erwärmung mindestens eines Kühlmittels,
Zuführen des in dem Klinkerkühler (20) erwärmten Kühlmittels zu dem ersten Wärmetauscher (80), um in dem Kühlmittel gespeicherte Wärme dem Wärmeträgerfluid zuzuführen.

11. Verfahren nach Anspruch 9 oder 10,
**gekennzeichnet durch**
Zuführen eines Teils der dem Ofen (10) entweichenden Rauchgase zu dem ersten Wärmetauscher, um in dem Teil des Rauchgases gespeicherte Wärme dem Wärmeträgerfluid zuzuführen, wobei das Rauchgas gekühlt wird, und
Zuführen des gekühlten Rauchgases als Zuluft zu dem Ofen (10).

12. Verfahren nach einem der Ansprüche 7 bis 9
**gekennzeichnet durch**
Vorwärmen von Rohmehl mit in dem Ofen (10) entweichendem Rauchgas gespeicherter Wärme in einem Rohmehlvorwärmer (30, 32), und
Zuführen von dem Rohmehlvorwärmer (30, 32) entnommenen Rauchgasen zu dem ersten Wärmetauscher, um in dem Rauchgas gespeicherte Wärme dem Wärmeträgerfluid zuzuführen.

13. Verfahren nach einem der Ansprüche 7 bis 10,
**dadurch gekennzeichnet, dass**
das Rauchgas vor dem Entsticken gefiltert wird.

## Claims

1. Device for manufacturing clinker, comprising at least:
- a kiln (10) for baking a raw-mix to clinker, having an outlet for flue gases;
- a clinker cooler (20) for cooling clinker taken from the kiln with a cooling agent; and
- means for denitriding (60) flue gases generated in the kiln;
**characterized in that**
(i) the device has at least one first heat exchanger (80) for conducting heat generated in the kiln during the combustion process to at least one heat-carrier fluid;
(ii) the first heat exchanger (80) is connected via at least one conduit for the heat-carrier fluid to at least one second heat exchanger (64) in order to heat flue gases in the second heat exchanger with heat previously supplied to the heat-carrier fluid; and
(iii) the second heat exchanger (64) has means for conducting the heated flue gases to the means for denitriding (60).

2. Device according to claim 1,
**characterized in that**
the clinker cooler (20) has at least one cooling-agent tap for drawing off cooling agent heated by the clinker and conducting it to the first heat exchanger (80), whereby heat stored in the cooling agent is conducted to the heat-carrier fluid.

3. Device according to claim 1 or 2,
**characterized in that**
the device has a further heat exchanger (62) that is connected to the means for denitriding (60) and to the second heat exchanger (64) in such manner that heat of the flue gases issuing from the means for denitriding (60) heats flue gases entering into the second heat exchanger.

4. Device according to any one of the preceding claims,
**characterized in that**
the first heat exchanger (80) comprises at least one conduit (83) for the heat-carrier fluid and, subsequent to this conduit (83), at least one further conduit (84) for heating a feed fluid of a steam boiler (100, 110).

5. Device according to any one oof the preceding claims,
**characterized in that**,
the device comprises a further heat exchanger (62) and means for conducting denitrided flue gases to the further heat exchanger (102), in order to heat a further heat-carrier fluid with heat of the denitrided flue gases.

6. Device according to any one of the preceding claims,
**characterized in that**
the device has a flue gas return facility for returning a portion of the flue gases of the kiln (10) back into it on the air inlet side, with the first heat exchanger being incorporated in the flue gas return facility in such manner that at least a portion of the flue gas stream is conducted to the first heat exchanger in ^ order to conduct heat stored in the flue gas stream to the heat-carrier fluid.

7. Device according to any one of the preceding claims,
**characterized in that**
the kiln (10) is connected on the exhaust air outlet side to at least one raw-mix preheater (30, 32) in order to preheat the raw mix with heat stored in the flue ^ gases, with the raw-mix preheater (30, 32) having a flue gas outlet that is connected to the first heat exchanger in order to conduct heat contained in the flue gas to the heat-carrier fluid.

8. Device according to any one of the preceding claims,
**characterized by**
at least one filter (50) for denitriding flue gases;
at least one conduit for conducting dedusted flue gases from the filter (50) to the means for denitriding (60) in order to denitride the flue gases following the dedusting.

9. Method for manufacturing clinker, comprising the steps:
- baking a raw-mix to clinker in a kiln (10);
- denitriding flue gases generated in the kiln (10);
**characterized by**
(i) heating a heat-carrier fluid in a first heat exchanger (80) with heat generated during the baking;
(ii) conducting the heat-carrier fluid to a second heat exchanger (64);
(iii) heating flue gases in the second heat exchanger, with heat being drawn off from the heat-carrier fluid;
(iv) conducting the previously heated flue gases tö means for denitriding in order to denitride the flue gases.

10. Method according to claim 7,
**characterized by**
conducting clinker taken from the kiln (10) to a clinker cooler (20); cooling the clinker in the clinker cooler (20) whilst simultaneously heating at least one cooling agent;
conducting the cooling agent heated in the clinker cooler (20) to the first heat exchanger (80) in order to conduct heat stored in the cooling agent to the heat-carrier fluid.

11. Method according to claim 9 or 10,
**characterized by**
conducting a portion of the flue gases escaping from the kiln (10) to the first heat exchanger in order to conduct heat stored in the portion of the flue gases to the <<<<<heat-carrier fluid, with the flue gas being cooled; and
conducting the cooled flue gas as supply-air to the kiln (10).

12. Method according to any one of claims 7 to 9,
**characterized by**
pre-heating of raw-mix with heat stored in flue gas escaping in the kiln (10) in a raw-mix preheater (30, 32) and conducting flue gases taken from the raw-mix preheater (30, 32) to the first heat exchanger in order to conduct heat stored in the flue gas to the heat-carrier fluid.

13. Method according to any one of claims 7 to 10,
**characterized in that**
the flue gas is filtered before being denitrided.

## Revendications

1. Dispositif pour la fabrication de clinker, comprenant au moins :
- un four (10) pour cuire la farine crue et obtenir le clinker, avec une sortie pour les gaz de combustion,
- un refroidisseur de clinker (20) pour refroidir le clinker tiré du four avec un agent de refroidissement, et
- des moyens pour dénitrurer (60) les gaz de combustion produits dans le four,
**caractérisé en ce que**
(i) le dispositif comporte au moins un premier échangeur de chaleur (80) pour amener la chaleur produite dans le four pendant le processus de combustion à au moins un fluide caloporteur,
(ii) le premier échangeur de chaleur (80) est relié par au moins une conduite de fluide caloporteur à au moins un deuxième échangeur de chaleur (64) pour chauffer des gaz de combustion dans le deuxième échangeur de chaleur avec de la chaleur communiquée au préalable au fluide caloporteur, et
(iii) le deuxième échangeur de chaleur (64) comporte des moyens pour amener les gaz de combustion chauffés aux moyens de dénitruration (60).

2. Dispositif selon la revendication 1, **caractérisé en ce que** le refroidisseur de clinker (20) possède au moins une prise d'agent de refroidissement pour retirer de l'agent de refroidissement chauffé par le clinker et l'amener au premier échangeur de chaleur (80), de sorte que la chaleur emmagasinée dans l'agent de refroidissement est communiquée au fluide caloporteur.

3. Dispositif selon la revendication 1 ou 2, **caractérisé en ce que** le dispositif comporte un autre échangeur de chaleur (62) qui est relié avec les moyens de dénitruration (60) et le deuxième échangeur de chaleur (64) de telle manière que la chaleur provenant des gaz de combustion sortant des moyens de dénitruration (60) chauffe des gaz de combustion entrant dans le deuxième échangeur de chaleur.

4. Dispositif selon l'une des revendications précédentes, **caractérisé en ce que** le premier échangeur de chaleur (80) présente au moins une conduite (83) pour le fluide caloporteur et secondairement à cette conduite (83) au moins une autre conduite (84) pour le chauffage d'un fluide d'alimentation d'une chaudière à vapeur (100, 110).

5. Dispositif selon l'une des revendications précédentes, **caractérisé en ce que** le dispositif présente un autre échangeur de chaleur (62) et des moyens pour amener des gaz de combustion dénitrurés à l'autre échangeur de chaleur (102) pour chauffer un autre fluide caloporteur avec la chaleur des gaz de combustion dénitrurés.

6. Dispositif selon l'une des revendications précédentes, **caractérisé en ce que** le dispositif comporte un retour de gaz de combustion pour ramener une partie des gaz de combustion du four (10) à celui-ci du côté de l'arrivée d'air, le premier échangeur de chaleur étant intégré dans le retour de gaz de combustion de telle manière qu'une partie au moins du flux de gaz de combustion soit amenée au premier échangeur de chaleur afin de communiquer la chaleur emmagasinée dans le flux de gaz de combustion au fluide caloporteur.

7. Dispositif selon l'une des revendications précédentes, **caractérisé en ce que** le four (10) est relié du côté de la sortie d'air à au moins un préchauffeur de farine crue (30, 32) pour préchauffer la farine crue avec la chaleur emmagasinée dans les gaz de combustion, le préchauffeur de farine crue (30, 32) possédant une sortie de gaz de combustion qui est reliée au premier échangeur de chaleur pour amener la chaleur contenue dans les gaz de combustion au fluide caloporteur.

8. Dispositif selon l'une des revendications précédentes, **caractérisé en ce qu'**il comporte
au moins un filtre (50) pour dépoussiérer les gaz de combustion,
au moins une conduite pour conduire les gaz de combustion dépoussiérés du filtre (50) aux moyens de dénitruration (60) pour dénitrurer les gaz de combustion après le dépoussiérage.

9. Procédé pour la fabrication de clinker comprenant les étapes de :
- cuisson de farine crue dans un four (10) pour obtenir du clinker,
- dénitruration des gaz de combustion produits dans le four (10),
**caractérisé en ce que**
(i) un fluide caloporteur est chauffé avec de la chaleur produite lors de la combustion dans un premier échangeur de chaleur (80),
(ii) le fluide caloporteur est conduit vers un deuxième échangeur de chaleur (64),
(iii) le gaz de combustion est chauffé dans le deuxième échangeur de chaleur (64) en prenant de la chaleur au fluide caloporteur,
(iv) les gaz de combustion préalablement chauffés sont amenés aux moyens de dénitruration (60) pour dénitrurer les gaz de combustion.

10. Procédé selon la revendication 7, **caractérisé en ce que**
du clinker prélevé dans le four (10) est amené à un refroidisseur de clinker (20),
le clinker est refroidi dans le refroidisseur de clinker (20) tout en chauffant en même temps au moins un agent de refroidissement,
l'agent de refroidissement chauffé dans le refroidisseur de clinker (20) est amené au premier échangeur de chaleur (80) pour communiquer la chaleur emmagasinée dans l'agent de refroidissement au fluide caloporteur.

11. Procédé selon la revendication 9 ou 10, **caractérisé en ce qu'**une partie des gaz de combustion s'échappant du four (10) est amenée au premier échangeur de chaleur pour amener la chaleur emmagasinée dans la partie des gaz de combustion au fluide caloporteur, ce qui refroidit le gaz de combustion,
et les gaz de combustion refroidis sont amenés comme air entrant dans le four (10).

12. Procédé selon l'une des revendications 7 à 9, **caractérisé en ce que**
la farine crue est chauffée avec la chaleur emmagasinée dans les gaz de combustion s'échappant dans le four (10) dans un préchauffeur de farine crue (30, 32), et
des gaz de combustion prélevés avant le préchauffeur de farine crue (30, 32) sont amenés au premier échangeur de chaleur pour communiquer la chaleur emmagasinée dans les gaz de combustion au fluide caloporteur.

13. Procédé selon l'une des revendications 7 à 10, **caractérisé en ce que** les gaz de combustion sont filtrés avant la dénitruration.
